# EUROPEAN PATENT APPLICATION

(11) **EP 1 070 528 A1**
(43) Date of publication of application: **24.01.2001**
(21) Application number: 99309041.4
(22) Date of filing: 12.11.1999
(51) Int. Cl.: B01D 27/00, B01D 27/06, B01D 27/08, B01D 35/30

(54) **Base module for filter system**

(30) Priority: 19.07.1999 US 356594
(71) Applicant: STANADYNE AUTOMOTIVE CORP., Windsor Connecticut 06095 (US)
(72) Inventor: Janik, Jeon P., Suffield, Connecticut 06078 (US); Williams, Michael J., Glastonbury, Connecticut 06033 (US)
(74) Representative: Leale, Robin George

(57) **Abstract**

A molded base module for a filter assembly comprises a header portion (20) which forms a receiving cavity for a replaceable cartridge (12) and includes integral inlet and outlet structures (34,36) for providing the communication with the received filtered cartridge. The base module also includes an integrally formed retainer (50) defining a retaining channel (54) for securably retaining the cartridge to the module. The retainer may include angularly spaced slots (60) which mate with corresponding retention tabs (70) of the cartridge.

## Description

This invention relates generally to fuel filter systems for internal combustion engines. More particularly, this invention relates to a base assembly for a fuel filter system which employs a replaceable cartridge mountable to the base.

In fuel filter systems to which the invention relates, such as disclosed in U.S. Patents Nos. 5,203,994, 5,302,284 and 5,766,463, a disposable filter cartridge is mounted to a base in such a way that it can be relatively easily removed at pre-established intervals for replacement purposes. The base typically has a pair of coaxial central conduits which provide the fuel inlet and outlet to the filter cartridge. The cartridge may contain a single or multiple filter stage configuration for filtering the fuel. In numerous embodiments the replaceable filter cartridge is suspended below the base, but other orientations are commonly employed. The base is mounted to the vehicle in any of a number of locations depending on the particular application and spacial constraints. The base typically also includes inlet and outlet connectors which may be in the form of posts or other structures which mount fittings and connect with the input and output lines to the base.

In one well known conventional construction, a retainer ring is threaded to the base and engages a circumferential roll seam shoulder of the filter cartridge to retain the cartridge to the base. The retainer ring may alternately include a ramp-like structure which mates with a complementary ramp of the base and the cartridge and/or retainer ring is springloaded to facilitate retention of the cartridge to the base. The cartridge typically includes sealing grommets or other sealing structures to seal the cartridge with the inlet and outlet conduits of the base. It should be appreciated that the base structures for replaceable filter cartridges may assume a wide variety of configurations as well as spacial orientations.

Viewed from one aspect the present invention provides a molded base module for a filter assembly, comprising:
a header portion having a central axis and defining a generally cylindrical receiving cavity symmetrical about said axis;
a retainer ring integrally extending from said header portion and defining an inward retaining channel generally coaxial with said axis;
a first conduit integrally axially projecting from said header portion into said cavity;
a second conduit integrally axially projecting from said header portion into said cavity;
a first connector communicating with said first conduit and integrally extending from said header portion away from said first conduit;
a second connector communicating with said second conduit and integrally extending from said header portion away from said second conduit; and
a bracket integrally extending from said header portion for mounting said header portion to a mounting structure.

In a preferred form the invention provides a novel base module for a filter assembly, such as a fuel filter assembly. The base module is a molded member which may, for example, be formed from plastics, glass-filled nylon or other similar materials. The module comprises a header portion having a central axis and defining a generally cylindrical receiving cavity symmetrical about the axis. A retainer ring integrally extends from the header portion and defines an inward retaining channel generally coaxial with the axis. Two conduits integrally axially project from the header portion into the cavity. A connector communicates with the first conduit and integrally extends from the header portion away from the conduit. A second connector communicates with the second conduit and integrally extends from the header portion away from the second conduit. A bracket integrally extends from the header portion for mounting the header portion to a mounting structure of the vehicle.

A metal ring may be disposed in the retaining channel. The ring includes a plurality of integral angularly spaced ramps. The retainer ring may also include an outer rim which has angularly spaced axial slots. The bracket preferably includes at least one opening for receiving a mounting fastener. In one described embodiment, the first and second conduits are coaxial, and the connectors extend generally axially.

A disposable filter cartridge having radially protruding retention tabs may be received in the receiving cavity wherein the tabs are captured in the retaining channel. The retainer ring preferably includes angularly spaced axial slots complementary with the tabs of the cartridge.

An embodiment of the invention will now be described by way of example and with reference to the accompanying drawings, in which:
Figure 1 is a central sectional view of a base module in accordance with the present invention;
Figure 2 is a bottom plan view, partly in phantom and with portions removed, of the base module of Figure 1;
Figure 3 is a central elevational sectional view, partly in diagrammatic form, of a fuel filter assembly comprising a base module of the present invention and a compatible fuel filter cartridge;
Figure 4 is a fragmentary perspective view, partly in phantom and partly in diagrammatic form, of the base module of Figure 1 illustrating a half section thereof;
Figure 5 is a central sectional view illustrating two pre-assembly components for the base module of Figure 1;
Figure 6 is a top plan view of the cartridge of Figure 3;
Figure 7 is a bottom plan view of the cartridge of Figure 3; and
Figure 8 is a plate that may be inserted into the base module of Figure 1.

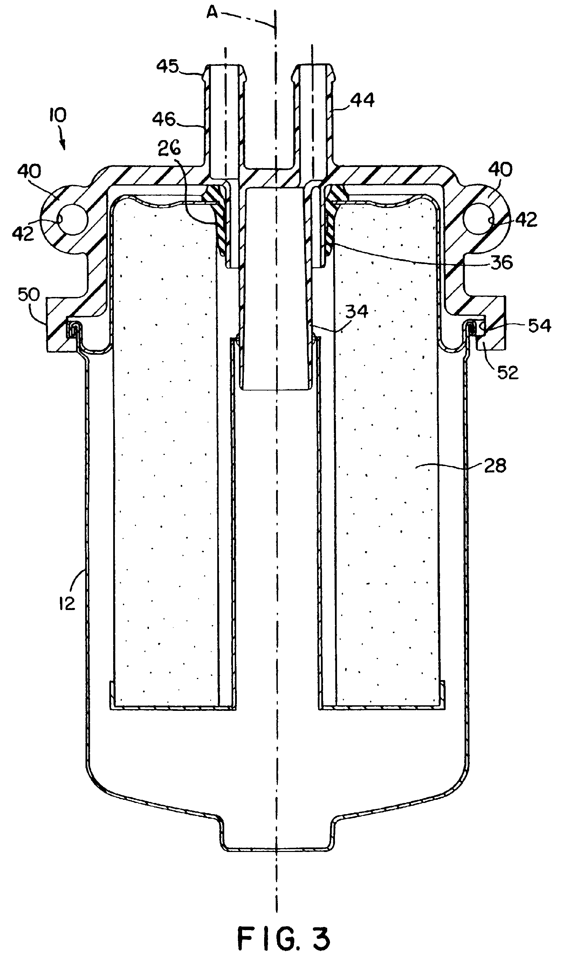

With reference to the drawings wherein like numerals represent like parts throughout the figures, a base module or header for a fuel filter system is generally designated by the numeral 10. The module 10 is preferably employed for receiving a disposable filter cartridge such as cartridge 12 (Figures 3,6 and 7) wherein the cartridge may be replaced as required. The module mounts to a vehicle at a specific location dictated by the specific vehicle constraints and provides a junction for receiving the fuel to be filtered and for transmitting the filtered fuel to the fuel supply system, the fuel injection pump and/or the internal combustion engine (none illustrated).

Although numerous applications are possible, the fuel filter assembly is especially adapted for incorporation into the fuel supply system of an internal combustion engine, such as a diesel engine, for removing particulate matter from the fuel and/or for separating water from the fuel. For the illustrated embodiment, the disposable filter cartridge is suspended from the base module although the module also has ready applicability to other mounting orientations. The invention is also applicable for other filter applications. In a preferred form, the module 10 is substantially manufactured from molded components composed of plastic, glass-filled nylon or the like. One preferred composition material is 33% glass-filled nylon.

The module comprises a header portion 20 which forms a receptacle having a cylindrical skirt about central axis A for receiving the communication end of the filter cartridge 12. In the illustrated embodiment, cartridge 12 is a single stage filter employing a pleated fan-shaped filter element 28. The central portion of the module includes an integral inlet conduit 34 and an integral coaxial outlet conduit 36. The conduits 34, 36 are sleeve-like structures. In a preferred configuration, the inlet conduit 34 axially extends a greater length than conduit 36 so that the flow path through the filter cartridge 12 is axially centrally and outwardly and the flow path through the filter element 28 is radially from the outer to the central interior and then generally axially through the outlet conduit 36. Alternative flow paths are also possible.

A pair of axial connectors 44 and 46 are integrally molded to extend away from the conduits 34 and 36 and to provide communication with the respective inlet and outlet conduits. The connectors 44 and 46 are configured with circular ridge surfaces 45 to facilitate the connection with various line fittings (not illustrated).

The module preferably includes one or more integral brackets 40. Each bracket may include an opening or bore 42 for receiving a fastener (not illustrated) to facilitate mounting of the module to the vehicle. It should be appreciated that other bracket and mounting configurations may be suitably employed.

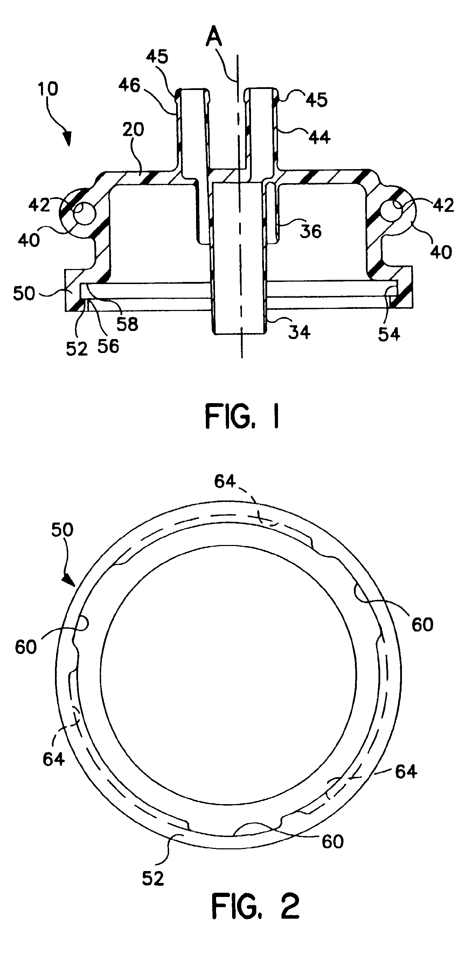

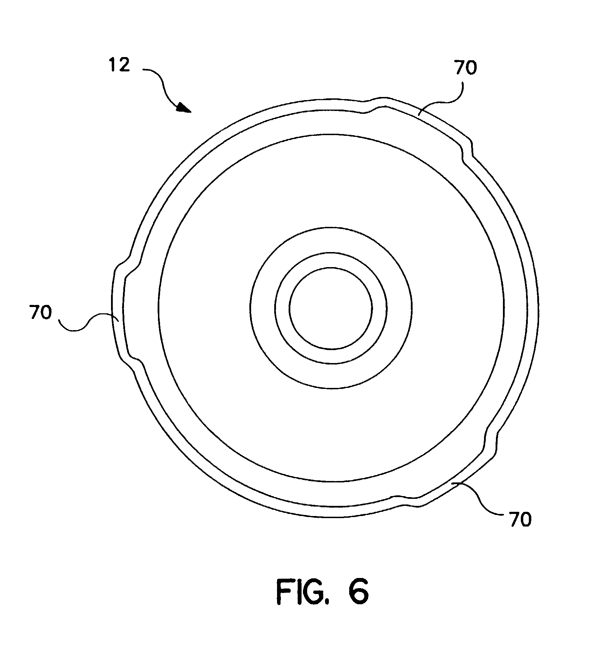

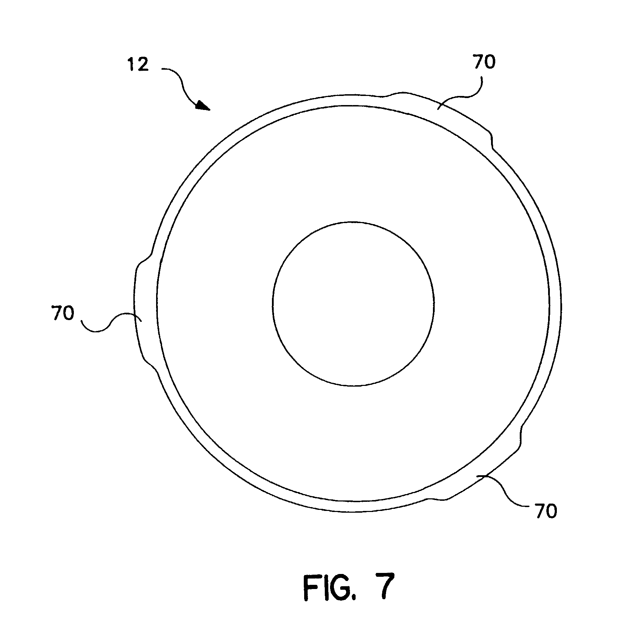

The outer (lower) end of the receptacle integrally flares to form a retainer fitting 50 for securing the cartridge to the base in a stable installed position and facilitating the reception thereof. The retainer 50 axially terminates in a lip 52 which forms an interior circumferential channel 54 and a pair of opposed axially spaced shoulders 56 and 58. The lip preferably defines a plurality of equiangularly spaced axial slots 60 as best illustrated in Figure 2. These slots mate with corresponding radially protruding tabs 70 (Figures 6 and 7) of the cartridge to facilitate axial reception upon angular alignment thereof and insertion into the receiving cavity of the header. The cartridge is then rotated so that its tabs 70 are retained at seats 64 (Figure 2) between the shoulders 56 and 58 of the receiver.

It should be appreciated that the shoulder 56 may have a ramp like structure to facilitate retention, in cooperation with a spring bias between the underside of the receptacle wall and the end of the cartridge, forcing the cartridge in a secure stable locked position with the module at the locked seated position wherein the tabs 70 are biased into the seats 64. In one embodiment the requisite spring bias may be provided by the end of a sealing grommet 26 of the cartridge. The releasable locking retention is thus accomplished without a separate retaining collar or retaining ring, and in some embodiments without a separate steel spring.

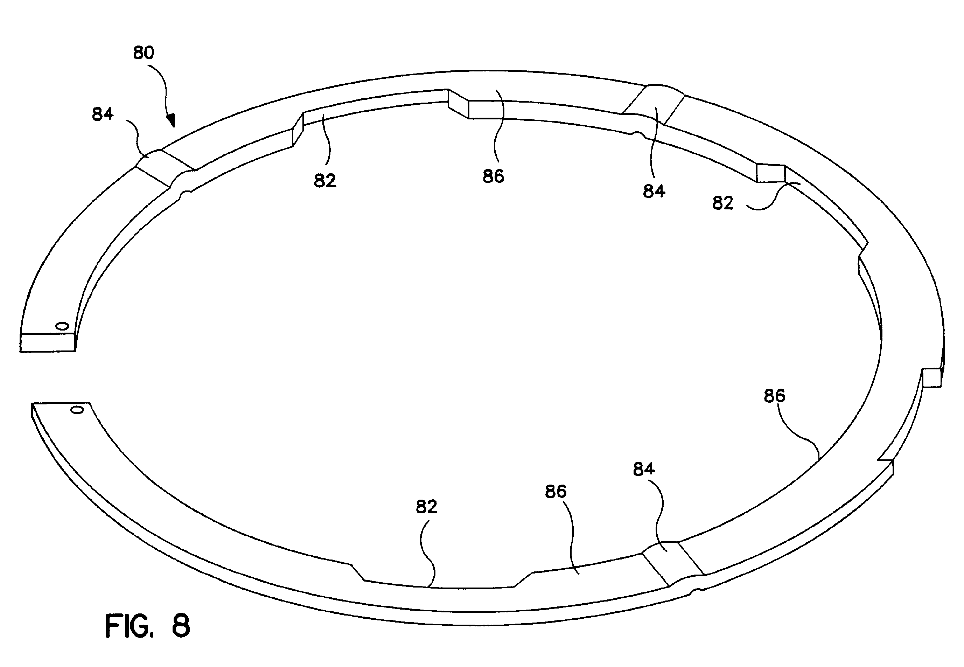

With reference to Figure 8, in one embodiment a stamped plate 80 in the form of a split ring includes preformed axial slots 82 and preformed ramp detents 84. The ring is inserted into the preformed channel 54 of the retainer and expands in place. The ring aligns with and/or defines the slots 60 of the retainer. The cartridge may then be secured in the installed position by rotation wherein the retention tabs 70 ride over the ramp detents with the cartridge being secured in the locked position by means of a biasing which functions to bias the cartridge toward the lower retainer shoulder 86 defined by the plate.

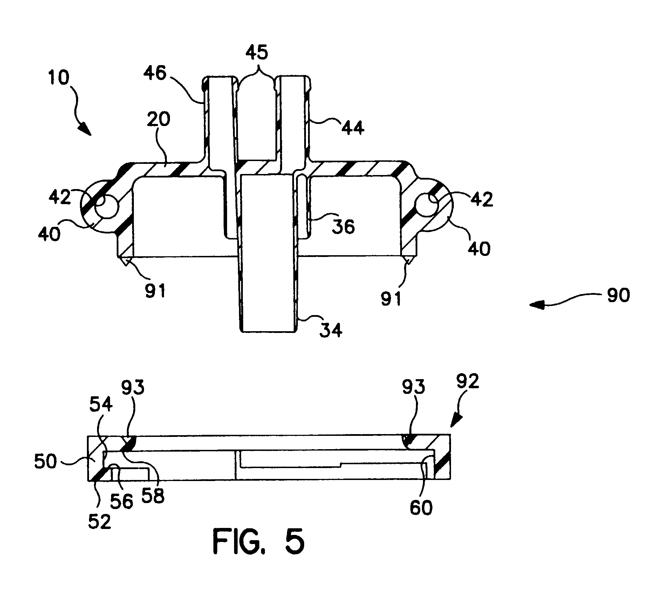

The module 10 is preferably a molded structure which in one embodiment is formed by a pair of molded components which are then sonically welded to form the integral module structure. As illustrated by the pre-assembly components of Figure 5, the receptacle portion 90 may be molded separately from the retainer structure 92, and then the two components are welded or joined together. An annular tongue 91 and groove 93 may facilitate the bond.

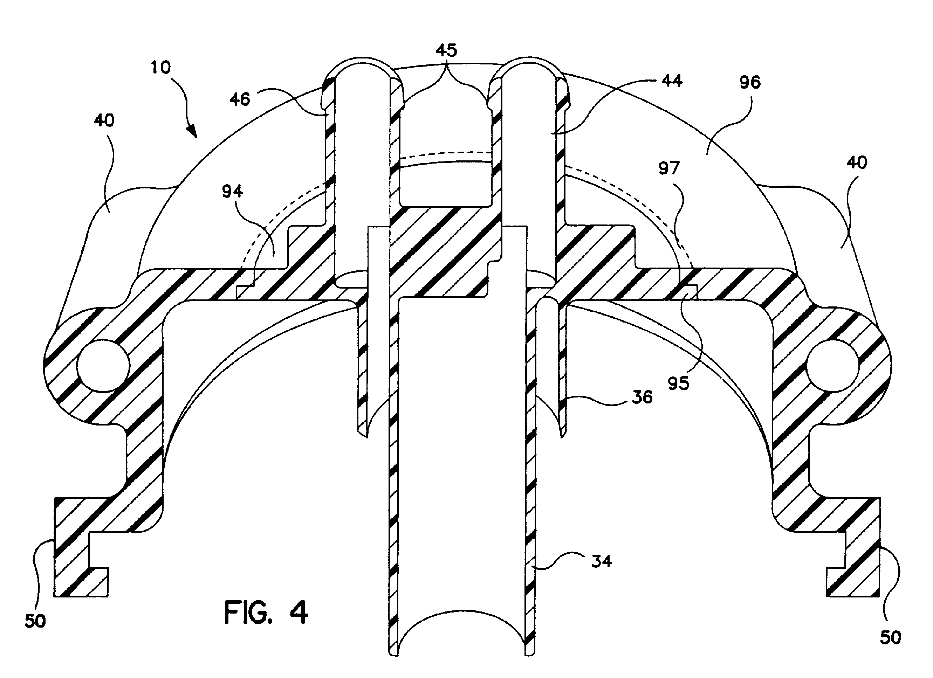

With reference to Figure 4, the structures may be integrally formed from a pair of radially central and outer pre-assembly components 94 and 96. The components 94 and 96 include a pair of locking rings 95 and 97 which are sonically welded to form the integral structure. The structure may then be completed by inserting the metal plate 80 (not illustrated in Figure 4) into the channel 54 to provide sufficient rigidity and stability to the module and sufficient locking and structural integrity for the received cartridge.

It will be appreciated that the foregoing base module 10 provides a module which does not require a separate retaining ring structure for securing the cartridge into position. Moreover, the module 10 may be formed in a relatively efficient and low cost manufacturing method, i.e., by molding the principal components and joining the components by sonic welding or other well known techniques to form the integral molded structure.

## Claims

1. A molded base module for a filter assembly, comprising:
a header portion (20) having a central axis (A) and defining a generally cylindrical receiving cavity symmetrical about said axis;
a retainer ring (50) integrally extending from said header portion and defining an inward retaining channel (54) generally coaxial with said axis;
a first conduit (34) integrally axially projecting from said header portion into said cavity;
a second conduit (36) integrally axially projecting from said header portion into said cavity;
a first connector (44) communicating with said first conduit and integrally extending from said header portion away from said first conduit;
a second connector (46) communicating with said second conduit and integrally extending from said header portion away from said second conduit; and
a bracket (40) integrally extending from said header portion for mounting said header portion to a mounting structure.

2. A base module as claimed in claim 1, further comprising a metal ring (80) disposed in said retaining channel (54).

3. A base module as claimed in claim 2, wherein said ring further includes a plurality of integral angularly spaced ramps (84).

4. A base module as claimed in any of claims 1 to 3, wherein said retainer ring (50) includes an outer rim (52), said rim defining a plurality of angularly spaced axial slots (60).

5. A base module as claimed in any preceding claim, wherein the said bracket (40) defines at least one opening (42) for receiving a mounting fastener.

6. A base module as claimed in any preceding claim, wherein said first and second conduits (34,36) are coaxial.

7. A base module as claimed in any preceding claim, wherein said first and second connectors (44,46) extend generally axially.

8. A base module as claimed in any preceding claim, wherein said module is formed from a plastics material.

9. A base module as claimed in any preceding claim, wherein said module is formed from a glass-filled nylon material.

10. A base module for a filter assembly, comprising:
a header portion (20) having a central axis (A) and defining a generally cylindrical receiving cavity symmetrical about said axis;
a retainer fitting (50) integrally extending from said header portion and defining an inward retaining channel (54) generally coaxial with said axis;
an inlet conduit (34) integrally axially projecting from said header portion;
an outlet conduit (36) integrally axially projecting from said header portion;
an inlet connector (44) communicating with said first conduit and integrally extending from said header portion away from said first conduit;
an outlet connector (46) communicating with said second conduit and integrally extending from said header portion away from said second conduit; and
mounting means (40) integrally extending from said header portion for mounting said header portion to a mounting structure.

11. A base module as claimed in claim 10, further comprising a metal ring (80) disposed in said retaining channel (54).

12. A base module as claimed in claim 11, wherein said ring (80) further includes a plurality of integral angularly spaced ramps (84).

13. A base module as claimed in any of claims 10 to 12, wherein said retainer fitting (50) includes an outer rim (52), said rim defining a plurality of angularly spaced axial slots (60) .

14. A base module as claimed in any of claims 10 to 13, wherein said retainer fitting (50) has a cylindrical side wall with a diameter greater than that of the header portion (20).

15. A base module as claimed in any of claims 10 to 15, wherein said base module is a unitary molded member.

16. A filter assembly comprising:
a molded base module including:
a header portion (20) having a central axis (A) and defining a generally cylindrical receiving cavity symmetrical about said axis;
a retainer fitting (50) integrally extending from said header portion and defining an inward retaining channel (54) generally coaxial with said axis;
a first conduit (34) integrally axially projecting from said header portion;
a second conduit (36) integrally axially projecting from said header portion;
a first connector (44) communicating with said first conduit and integrally extending from said header portion;
a second connector (46) communicating with said second conduit and integrally extending from said header portion;
a bracket means (40) integrally extending from said header portion for mounting said header portion to a mounting structure; and
a filter cartridge (12) having a retaining shoulder received in said receiving cavity wherein said shoulder is captured in said retaining channel (54).

17. A filter assembly as claimed in claim 16, further comprising a metal ring (80) disposed in said retaining channel (54), said shoulder engaging said ring.

18. A filter assembly as claimed in claim 17, wherein said ring (80) further includes a plurality of integral angularly spaced ramps (84), said shoulder comprising angularly spaced tabs (70) which are angularly engageable against said ramps.

19. A filter assembly as claimed in claim 18, wherein said retainer fitting (50) includes an outer rim (52), said rim defining a plurality of angularly spaced axial slots (60) which are complementary with said tabs (70).
